# EUROPÄISCHE PATENTSCHRIFT

(11) **EP 1 389 879 B1**
(45) Veröffentlichungstag und Bekanntmachung des Hinweises auf die Patenterteilung: **08.06.2005**
(21) Anmeldenummer: 02018485.9
(22) Anmeldetag: 16.08.2002
(51) Int. Cl.: H04Q 3/00

(54) **Lastverteilung in SS7-Netzen**
Load sharing in SS7 networks
Répartition de charge dans des réseaux SS7

(43) Veröffentlichungstag der Anmeldung: 18.02.2004
(73) Patentinhaber: SIEMENS AKTIENGESELLSCHAFT, 80333 München (DE)
(72) Erfinder: Angermayr, Manfred, Dipl.-Ing., 81371 München (DE); Schwarzbauer, Hanns Jürgen, Dr., 82194 Gröbenzell (DE); Tüxen, Michael, Dr., 81479 München (DE)

(56) Entgegenhaltungen:
- EP-A- 0 912 068
- JABBARI B: "ROUTING AND CONGESTION CONTROL IN COMMON CHANNEL SIGNALING SYSTEM NO. 7" PROCEEDINGS OF THE IEEE, Bd. 80, Nr. 4, April 1992 (1992-04), Seiten 607-617, XP000304351 ISSN: 0018-9219
- "Signalling network functions and messages" ITU-T RECOMMENDATION Q.704, Juli 1996 (1996-07), XP002196391
- "Introduction to CCITT signalling system No. 7" ITU-T RECOMMENDATION Q.700, März 1993 (1993-03), XP002231162

## Beschreibung

In Kommunikationsnetzen, in denen das durch die International Telecommunication Union ITU genormte zentrale Zeichengabesystem Nr. 7 bzw. Common Channel Signaling System 7 CCS7, auch SS7, gemäß der Recommendations ITU-T Q.700 und folgende zur Übermittlung von Nachrichten eingesetzt wird, erfolgt die Kommunikation zwischen zwei Signalisierungspunkten oder Signaling Points SP, d.h. Knoten und/oder Endpunkten des Kommunikationsnetzwerkes, über Verbindungen, die in diesem Kontext Signaling Links oder SS7-Links genannt werden. Ein Knoten wird auch als Signaling Transfer Point STP bezeichnet, ein Endpunkt hingegen wird auch als Signaling End Point SEP bezeichnet.

Wie in ITU-T Q.700ff beschrieben, ist es in SS7 Kommunikationsnetzen möglich, Signaling Links zu sogenannten Signaling Link Sets zusammenzufassen. Ein Signaling Link Set umfaßt jeweils zumindest einen Signaling Link.

Ebenfalls in ITU-T Q.700ff ist die Architektur des SS7 beschrieben. Unterschieden werden verschiedene Protokollschichten, hier Level genannt. Level 1-3 bilden den Message Transfer Part MTP. Mehrere Level 4 Protokolle sind im SS7 definiert und werden hier User Parts UP genannt. Beispiele hierfür sind der Telephone User Part TUP, der ISDN User Part ISUP oder der Signaling Connection Control Part SCCP. Nachrichten dieser User Parts werden durch den MTP gesichert übertragen. Dabei wird ein sogenannter Service Indicator SI verwendet, um die einzelnen User Parts zu unterscheiden. Der SI ist ein 4 bit Wert; es gilt (auszugsweise dargestellt) folgende Zuordnung zu den User Parts:

| SI | MTP User |
|---|---|
| 0 | Signaling Network Management Messages (SNM) |
| 1 | Maintenance Regular Messages (MTN) |
| 2 | Maintenance Special Messages (MTNS) |
| 3 | Signaling Connection Control Part (SCCP) |
| 4 | Telephone User Part (TUP) |
| 5 | ISDN User Part (ISUP) |
| 6 | Data User Part (call and circuit-related messages) |
| 7 | Data User Part (facility registration/cancellation messages) |
| 8 | MTP Testing User Part |

Der MTP, insbesondere der MTP Level 3, leistet auch die Verwaltung der Links. Im Fall von mehreren Link Sets und/oder mehreren Links zwischen zwei Signaling Points wird durch den MTP Level 3 u.a. eine Lastverteilung bzw. ein Load Sharing anhand des sogenannten Signaling Link Selection Field SLS bewirkt, beschrieben in ITU-T Q.704. Dabei ist der SLS Wert Teil des sogenannten Routing Labels und weist eine Länge von 4 bit auf.

In bekannten SS7 Implementierungen wird bislang das Load Sharing ausschließlich auf Basis des im SLS Feld enthaltenen Wertes vorgenommen. Dies ist jedoch in bestimmten Einsatzfällen unzureichend. In ITU-T Q.700 Kapitel 3.2.1 und in ITU-T Q.704 Kapitel 2.3.1 ist jeweils erwähnt, daß das Routing von Nachrichten, nicht jedoch das Load Sharing, auch anhand des Service Indicator SI vorgenommen werden kann.

Aus EP 0 912 068 A2 (Fujitsu Limited), 28 April 1999, ist schon ein Verfahren zur Lastverteilung für Signaling Links bekannt, wobei die Lastverteilung auf einer Auswertung des Service Indicator SI im Routing Label von Nachrichten basiert wird.

Es ist daher Aufgabe der vorliegenden Erfindung, ein Verfahren zur Lastverteilung für Link Sets bzw. zum Load Sharing in SS7 Netzen basierend auf dem Service Indicator mit geringem Implementierungsaufwand anzugeben.

Diese Aufgabe wird durch ein Verfahren zur Lastverteilung ausgehend vom Oberbegriff der Patentansprüche 1 bis 3 durch deren kennzeichnende Merkmale gelöst.

Bevorzugte Ausführungsformen sind Gegenstand der abhängigen Ansprüche.

Ein wichtiger Aspekt der vorliegenden Erfindung ist darin zu sehen, daß für das Load Sharing in SS7 Netzen neben dem üblicherweise verwendeten SLS Feld im Routing Label von Nachrichten bzw. Message Signaling Units MSU auch das SI Feld, welches im MTP-Header der MSU enthalten ist, verwendet wird. Falls nur zwei Links bzw. Verbindungen zwischen zwei Punkten des SS7 Netzwerkes bestehen, kann das Load Sharing auch nur anhand des SI Feldes vorgenommen werden.

Ein wesentlicher Vorteil besteht darin, daß das SI Feld repräsentativ für den User Part der MSU ist und somit ein Load Sharing basierend auf dem User Part der MSU vorgenommen werden kann. Gemäß obenstehender Tabelle ist beispielsweise für den ISDN User Part ISUP der Service Indicator SI "5"="0101B" vorgesehen, für den Signaling Connection Control Part SCCP hingegen ein SI "3"="0011B". Wie anhand der angegebenen binären Repräsentation der SI Werte für SCCP und ISUP ablesbar, ist eine Unterscheidung dieser beiden User Parts durch Auswertung der Bits mit Wertigkeit "2" oder "4", d.h. Bit 2¹ oder 2², möglich.

Ein Load Sharing basierend auf dem User Part einer MSU hat wiederum mehrere Vorteile. Einer dieser Vorteile liegt darin, daß beispielsweise für SCCP-Nachrichten und für ISUP-Nachrichten gesonderte Links und/oder Link Sets vorgesehen werden können. SCCP-Nachrichten sind im Durchschnitt länger als ISUP-Nachrichten, wodurch Sendepuffer von Signalisierungspunkten durch SCCP-Nachrichten stärker belastet werden als durch ISUP-Nachrichten. Dies wiederum kann dazu führen, daß ISUP-Nachrichten durch SCCP-Nachrichten behindert bzw. verzögert werden. Dies ist jedoch in Anwendungsfällen, in denen ISUP-Nachrichten eine höhere Priorität zugeordnet ist als SCCP-Nachrichten, zu vermeiden. Dies wird durch die vorliegende Erfindung vorteilhaft gelöst.

Ein weiterer Vorteil liegt darin begründet, daß mit herkömmlichem Load Sharing die Verteilung des Verkehrs auf nur 16 Links möglich ist, da der SLS Wert ein 4 bit Wert ist. Diese Anzahl kann durch Verwendung des SI Feldes, welches ebenfalls 4 bit umfaßt, erweitert werden. Beispielsweise ergibt sich durch die bereits erwähnte Unterscheidung zwischen SCCP- und ISUP-Nachrichten eine Verdoppelung der Anzahl auf 32 mögliche Links oder Link Sets, davon 16 für ISUP-Nachrichten und 16 für SCCP-Nachrichten.

Vorteilhaft kann die Erfindung im Zusammenhang mit anderen Verfahren, die den durch das SLS Feld aufgespannten Adreßraum erweitern, eingesetzt werden, wobei sich dann die Anzahl der möglichen Links/Link Sets beispielsweise bei Unterscheidung von SCCP- und ISUP-Nachrichten wiederum verdoppelt.

Die Erfindung erfordert - mit Ausnahme der Implementierung des verbesserten Load Sharing Verfahrens - keine Modifikationen an Komponenten des Kommunikationsnetzwerkes und ist daher einfach und kostengünstig implementierbar. Insbesondere betrifft das Verfahren nur die sendende(n) Komponente(n), für die empfangende(n) Komponente(n) sind keine Modifikationen vorzusehen.

Durch die Auswertung des SI Feldes, welches Bestandteil des Service Information Octet SIO ist, welches wiederum Bestandteil des MTP Headers ist, kann schnell und ohne Analyse der durch den MTP transportierten Protokollschichten ein Load Sharing gemäß der transportierten Protokollschichten bzw. U-ser Parts durchgeführt werden. Diese für jede Nachricht feststehende Kodierung hat vorteilhaft zur Folge, daß eine Auswertung weitgehend hardwarebasiert erfolgen kann und damit für den Einsatz in Signaling Points, insbesondere in Signaling Transfer Points, für welche hohe Anforderungen hinsichtlich des Durchsatzes und der Durchlaufzeiten von Nachrichten bestehen, besonders geeignet ist.

Erfindungsgemäß wird ebenfalls ein Netzelement vorgesehen, welches Mittel zur Durchführung des erfindungsgemäßen Verfahrens zur Lastverteilung aufweist.

Vorteilhaft ist das erfindungsgemäße Verfahren im Zusammenhang mit anderen Load Sharing Verfahren ohne weiteres einsetzbar. Besteht beispielsweise ein herkömmliches Load Sharing Verfahren in den Schritten
(a) Erzeugen einer Liste möglicher Link Sets zum gewünschten Ziel, beispielsweise anhand des SS7 Destination Point Code DPC,
(b) Auswahl eines der Link Sets, wobei dies in klassischen Implementierungen lediglich anhand des SLS Wertes erfolgt, in moderneren Implementierungen hingegen beispielsweise auch anhand weiterer Felder einer MSU,
(c) Auswahl eines Links innerhalb des in Schritt (b) gewählten Link Set beispielsweise wieder anhand des SLS Wertes und/oder weiterer Felder, wobei üblicherweise andere Bitpositionen der berücksichtigten Felder für die Schritte (b) und (c) verwendet werden, damit Schritte (b) und (c) unabhängig voneinander sind,
dann kann erfindungsgemäß die Auswahl der Link Sets oder der Links zusätzlich oder ausschließlich anhand des SI Feldes erfolgen, wobei das restliche Auswahlverfahren unberührt bleibt.

Im folgenden wird die Erfindung im Zusammenhang mit einer Figur als Ausführungsbeispiel näher erläutert.

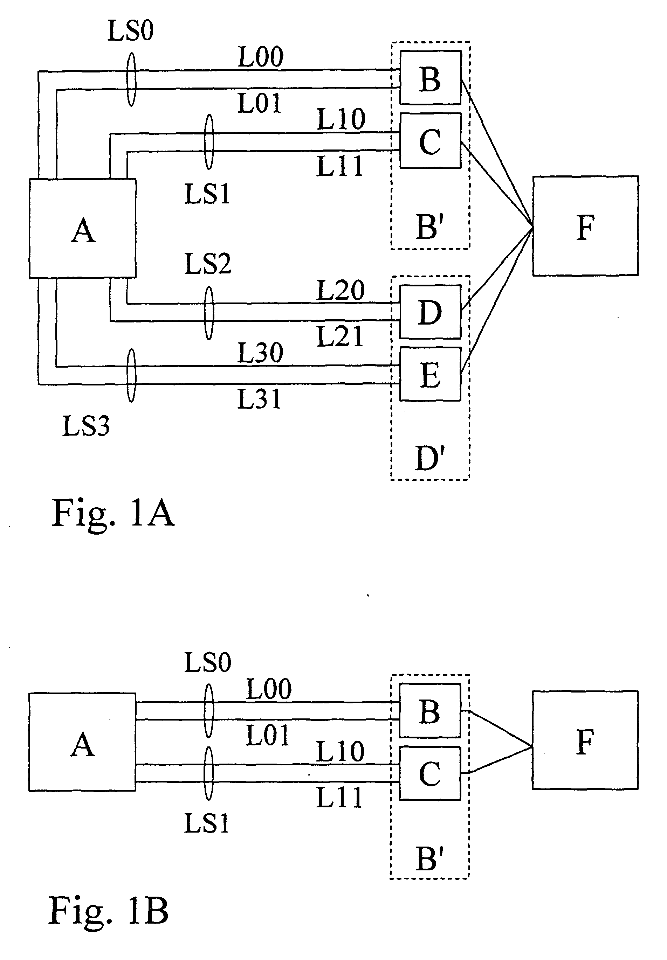

Figur 1 zeigt zwei typische Netzwerkanordnungen. In Figur 1A ist ein erster Signalisierungspunkt SP A mit einem zweiten Signalisierungspunkt F vermittels vier weiterer Signalisierungspunkte SP B, SP C, SP D, SP E verbunden. Zur Verbindung zwischen SP A und den weiteren Signalisierungspunkten SP B..E dienen vier Link Sets LS0, LS1, LS2, LS3. Dabei umfassen die Link Sets jeweils zwei Links L00, L01 und L10, L11 und L20, L21 und L30, L31. Die Verbindungen zwischen SP F und den weiteren Signalisierungspunkten SP B..E kann beliebig gestaltet sein.

Die Anordnung in Figur 1B entspricht der Anordnung aus Figur 1A, allerdings entfallen SP D und SP E sowie LS2 und LS3 und deren zugeordnete Links L20, L21 und L30, L31.

Die genannten SP A und SP F können dabei Signaling End Points SEP oder Signal Transfer Point STP sein. Für die vorliegende Bedeutung ist dies jedoch nicht von Bedeutung. Bezüglich der Kommunikation zwischen SP A und SP F handelt es sich bei den weiteren Signalisierungspunkten SP B, SP C, SP D, SP E um Signaling Transfer Points STP.

Die Darstellung der Link Sets als jeweils zwei Links umfassend ist lediglich beispielhaft. In anderen Ausprägungen umfassen die Link Sets eine beliebige Anzahl von Links, dabei kann auch die Anzahl der Links für verschiedene Link Sets verschieden sein.

Dabei können als verschieden dargestellte STPs SP B, SP C, sowie SP D, SP E, wie in Figur 1 gestrichelt dargestellt, in einer vorteilhaften Ausgestaltung zu funktionalen Einheiten B', D' zusammengefaßt werden. Obwohl die Einheiten B', D' je zwei Point Codes PC aufweisen, können in praktischen Konfigurationen die Einheiten B', D' als einheitlicher Signalisierungspunkt gestaltet werden, wodurch eine Situation zustande kommen kann, in der zu einem Knoten B', D' zwei Link Sets existieren.

Beispielhaft sei im folgenden anhand der Strukturen in Figuren 1A und 1B beschrieben, wie eine Unterscheidung und ein Load Sharing zwischen ISUP und SCCP Verkehr vorgenommen werden kann. Durch die vorliegende Erfindung ist es möglich, ein Load Sharing zwischen STPs SP B..E zu realisieren. Betrachtet wird im folgenden das Senden von MSUs durch SP A an SP F.

Zunächst werden die für die Übertragung von MSUs von SP A an SP F möglichen Link Sets LS0,...,LS3 ermittelt und in eine Liste LS beim SP A eingetragen. Diese Ermittlung kann, wie bekannt, anhand des Point Codes von SP F, der als Destination Point Code in einer MSU eingetragen ist, erfolgen. Im in Figur 1A dargestellten Fall ist die Liste LS gegeben durch LS = [LS0, LS1, LS2, LS3]. Im Beispiel aus Figur 1B ist die Liste LS gegeben durch LS = [LS0, LS1, LS0, LS1], in einer Ausgestaltung auch [LS0, LS1]. Die Liste LS ist das Ergebnis eines ersten Schrittes.

Zur Auswahl des Link Sets steht anhand von für SP A geltenden Vorgaben fest, welches Bit des 4 bit SLS Wertes zur Auswahl eines Link Set ausgewertet wird. Diese Vorgaben werden gemeinsam mit weiteren administrierten Daten beispielsweise pro Ziel gesondert in SP A hinterlegt.

Der Wert des auszuwertenden Bits des SLS Wertes wird mit Bit(SLS) bezeichnet und ist entweder 0 oder 1. Bei der Auswertung des SI Wertes kann einfach das zweite oder dritte Bit des SI Wertes verwendet werden (Bitpositionen 2¹ oder 2²), da diese sich für SCCP und ISUP unterscheiden. Der Wert dieses Bits wird mit Bit(SI) bezeichnet.

Die Auswahl des Link Sets erfolgt mittels eines indizierten Zugriffs auf die Liste LS, wobei als Index 2*Bit(SLS)+Bit(SI) verwendet wird.

Soll ein Load Sharing über mehr als 4 Link Sets ausgeführt werden, können entsprechend mehr als ein Bit des SLS Wertes ausgewertet werden. Beim Load Sharing über 2 Link Sets, wie in der Anordnung aus Figur 1B, kann das Auswahlverfahren dahingehend vereinfacht werden, daß die Auswertung des SLS Wertes komplett entfällt und eines der beiden Link Sets nur anhand des SI Wertes ausgewählt wird.

Wird das Bit mit der Wertigkeit 2¹ des SI Wertes als Bit(SI) verwendet, ergibt sich für den in Figur 1A dargestellten Fall folgende Auswahltabelle:

| LS | Bit (SLS) | Bit(SI) |
|---|---|---|
| 0 | 0 | 0 = ISUP |
| 1 | 0 | 1 = SCCP |
| 2 | 1 | 0 = ISUP |
| 3 | 1 | 1 = SCCP |

Wird das Bit mit der Wertigkeit 2² des SI Wertes als Bit(SI) verwendet, ergibt sich für den in Figur 1A dargestellten Fall folgende Auswahltabelle:

| LS | Bit(SLS) | Bit(SI) |
|---|---|---|
| 0 | 0 | 0 = SCCP |
| 1 | 0 | 1 = ISUP |
| 2 | 1 | 0 = SCCP |
| 3 | 1 | 1 = ISUP |

Nach Auswahl des Link Sets wird ein Link des Link Sets gewählt, indem ein weiteres Bit des SLS Wertes ausgewertet wird. Der Vorgang der Auswahl eines Links bleibt jedoch gegenüber herkömmlichen Verfahren unverändert.

Falls ein Link Set ausfällt oder nach Ausfall wieder aktiv wird, ändert sich die Liste LS. In einer vorteilhaften Ausgestaltung werden Link Sets zur gleichen Einheit B', D' als ein Paar betrachtet, folglich ergibt sich die Liste LS für die Anordnung in Figur 1A als LS = [[LS0, LS1], [LS2,LS3]]. Fällt ein Link Set aus, so wird dieses durch das andere des Paares ersetzt. Wird ein Link Set nach Ausfall wieder aktiv, so wird der alte Stand wiederhergestellt.

Dies hat den Vorteil, daß beispielsweise der bisher durch die Einheit B' vermittelte Verkehr bei Ausfall von LS0 weiterhin komplett durch die Einheit B' vermittelt wird, da durch die beschriebene Paarbildung als Ersatzweg mit LS1 die noch aktive weitere Verbindung zu B' verwendet wird. Dadurch wird vermieden, daß durch die Einheit D' einen Teil des von B' vermittelten Verkehrs übernommen werden muß. Somit bleibt die ursprüngliche Balance zwischen den Einheiten B' und D' erhalten.

Fällt ein ganzes Paar aus, so wird das andere Paar verwendet. Tritt auch in diesem Paar eine Störung eines Link Sets auf, kann kein Load Sharing zwischen Link Sets mehr stattfinden, da die Liste LS dann nur noch aus einem Link Set besteht.

Es ist selbstverständlich, daß die vorliegende Erfindung auch angewendet werden kann, wenn zum Load Sharing über mehr als 16 Link Sets bzw. Links eine Erweiterung des durch das SLS Feld aufgespannten "Adreßraumes" mittels weiterer Felder einer MSU vorgesehen ist.

Die vorliegende Erfindung kann demzufolge auch im Zusammenhang mit "Virtual SLS" oder anderen Verfahren verwendet werden, die sicherstellen, daß in verzweigten SS7-Netzen für STPs eine geeignete Anzahl von für das Load Sharing noch verwendbarer Bits zur Verfügung stehen.

Obwohl im Zusammenhang mit SCCP und ISUP beschrieben, ist die Erfindung ohne weiteres auch im Zusammenhang mit allen anderen User Parts anwendbar, beispielsweise um SCCP und TUP Verkehr zu trennen.

Ist lediglich ein Link Set vorgesehen, kann das erfindungsgemäße Auswahlverfahren für die dann vorhandenen Links angewendet werden - nicht dargestellt.

Das erfindungsgemäße Verfahren ist ohne weiteres für alle Ausprägungen von SS7-Netzwerken anwendbar. Es ist insbesondere anwendbar für herkömmliche SS7-Netze, bei denen klassische zeitmultiplexe TDM Links eingesetzt werden. Das erfindungsgemäße Verfahren ist insbesondere auch anwendbar für SS7-Netze, die durch entsprechende Methoden auf Internetprotokoll IP Netze abgebildet werden, bei denen also beispielsweise IP Verbindungen bzw. IP Links anstelle der TDM Links eingesetzt werden und bei denen Signalisierungspunkte SP A..F mittels IP an ein Kommunikationsnetz angebunden sind. Andere Transportmedien oder Transportprotokolle für SS7 sind im Zusanmmenhang mit der vorliegenden Erfindung ebenfalls einsetzbar.

## Patentansprüche

1. Verfahren zur Lastverteilung zwischen einem ersten Signalisierungspunkt (A) und einem zweiten Signalisierungspunkt (F) in Kommunikationsnetzen, wobei zur Signalisierung zwischen Signalisierungspunkten (A, B, C, D, E, F) das Signalisierungssystem 7 vorgesehen ist und wobei die Lastverteilung auf einer Auswertung des Service Indicator SI im Routing Label von Nachrichten basiert wird,
**dadurch gekennzeichnet,**
**daß** die Verteilung zu übermittelnder Nachrichten basierend auf deren User Part so vorgenommen wird, daß Nachrichten eines ersten User Parts über ein erstes Link Set und Nachrichten eines zweiten User Parts über ein zweites Link Set verteilt werden, indem:
- für die zu übermittelnde Nachricht in einem ersten Schritt eine Liste von Link Sets (LS0..3) zur Übermittlung der Nachricht an deren Ziel ermittelt wird,
- **daß** in einem zweiten Schritt einige oder alle Bits des SI Feldes der zu übermittelnden Nachricht ausgewählt und zu einem Indexwert der genannten Liste verknüpft werden, und
- **daß** in einem dritten Schritt das durch den Indexwert bezeichnete Link Set (LS0..3) zur Übertragung der Nachricht ausgewählt wird.

2. Verfahren nach Anspruch 1,
**dadurch gekennzeichnet,**
**daß** in einem vierten Schritt unter mehreren Signalisierungslinks (L00..31)des ausgewählten Link Sets (LS0..3) ein Signalisierungslink (L00..31) ausgewählt wird, indem der erste und der zweite Schritt für die Signalisierungslinks (L00..31) des Link Sets (LS0..3) wiederholt werden.

3. Verfahren nach einem der Ansprüche 1 oder 2,
**dadurch gekennzeichnet,**
**daß** im zweiten Schritt zumindest das Bit mit der Wertigkeit "2" und/oder das Bit mit der Wertigkeit "4" des SI Feldes berücksichtigt wird.

4. Signalisierungspunkt (A) eines Netzwerkes gemäß des Signalisierungssystems 7 mit Mitteln zur Durchführung des Verfahrens nach einem der Ansprüche 1 bis 3.

## Claims

1. Method for load distribution between a first signalling point (A) and a second signalling point (F) in communications networks, wherein Signalling System 7 is provided for signalling between signalling points (A, B, C, D, E, F) and wherein the load distribution is based on an evaluation of the service indicator SI in the routing label of messages,
**characterised in that**
the distribution of messages to be transmitted based on their User Part is carried out such that messages of a first User Part are distributed via a first link set and messages of a second User Part are distributed via a second link set, in which;
- in a first step, for a message to be transmitted, a list of link sets (LS0..3) is determined for transmitting the message to its destination,
- in a second step, some or all of the bits of the SI field of the message to be transmitted are selected and linked to an index value of the cited list,
- in a third step, the link set (LS0..3) referred to by the index value is selected in order to transmit the message.

2. Method according to Claim 1
**characterised in that**
in a fourth step, one signalling link (L00..31) is selected from multiple signalling links (L00..31) of the selected link set (LS0..3) by repeating the first and second step for the signalling links (L00..31) of the link set (LS0..3).

3. Method according to one of the Claims 1 or 2
**characterised in that**
in the second step at least the bit with significance "2" and/or the bit with significance "4" of the SI field are taken into account.

4. Signalling point (A) of a network according to Signalling System 7 having means for performing the method according to one of the Claims 1 to 3.

## Revendications

1. Procédé de répartition de charge entre un premier point de signalisation (A) et un second point de signalisation (F) dans des réseaux de communication, où pour la signalisation entre des points de signalisation (A, B, C, D, E, F) le système de signalisation 7 est prévu et où la répartition de charge est basée sur une évaluation de l'indicateur de service SI dans le libellé de routage de messages,
**caractérisé en ce que**
la répartition de messages à transmettre, sur la base de leur sous-système utilisateur, est effectuée de manière que des messages d'un premier sous-système utilisateur soient réparties par l'intermédiaire d'un premier ensemble de liaisons et des messages d'un second sous-sytème utilisateur par l'intermédiaire d'un second ensemble de liaisons :
- en déterminant pour le message à transmettre, dans une première étape, une liste d'ensembles de liaisons (LS0..3) pour la transmission du message vers sa destination,
- **en ce que**, dans une seconde étape, certains ou tous les bits du champ SI du message à transmettre sont sélectionnés et combinés en une valeur d'index de ladite liste, et
- **en ce que**, dans une troisième étape, l'ensemble de liaisons (LS0..3) repéré par la valeur d'index est sélectionné pour la transmission du message.

2. Procédé selon la revendication 1,
**caractérisé en ce que**,
dans une quatrième étape, parmi plusieurs liaisons de signalisation (L00..31) de l'ensemble sélectionné de liaisons (LS0..3), une liaison de signalisation (L00..31) est sélectionnée en répétant la première et la seconde étape pour les liaisons de signalisation (L00..31) de l'ensemble de liaisons (LS0..3).

3. Procédé selon l'une des revendications 1 ou 2,
**caractérisé en ce que**,
dans la seconde étape, il est tenu compte au moins du bit ayant la valeur "2" et/ou du bit ayant la valeur "4" du champ SI.

4. Point de signalisation (A) d'un réseau suivant le système de signalisation 7 comprenant des moyens pour la mise en oeuvre du procédé selon l'une des revendications 1 à 3.
